# EUROPÄISCHE PATENTSCHRIFT

(11) **EP 1 098 788 B1**
(45) Veröffentlichungstag und Bekanntmachung des Hinweises auf die Patenterteilung: **14.08.2002**
(21) Anmeldenummer: 99947234.3
(22) Anmeldetag: 22.07.1999
(51) Int. Cl.: B60R 16/02

(54) **STEUERUNG FÜR EINE MEHRZAHL VON ELEKTRISCHEN VERBRAUCHERN EINES KRAFTFAHRZEUGS**
CONTROL FOR A PLURALITY OF ELECTRICAL CONSUMERS OF A MOTOR VEHICLE
COMMANDE POUR UNE PLURALITE DE CONSOMMATEURS ELECTRIQUES D'AUTOMOBILE

(30) Priorität: 22.07.1998 DE 19832531
(43) Veröffentlichungstag der Anmeldung: 16.05.2001
(73) Patentinhaber: ROBERT BOSCH GMBH, 70442 Stuttgart (DE)
(72) Erfinder: WEBER, Jens, D-65779 Kelkheim-Fischbach (DE); KIRCHER, Jens, D-70839 Gerlingen (DE)
(86) Internationale Anmeldenummer: DE9902221
(87) Internationale Veröffentlichungsnummer: WO0005103

(56) Entgegenhaltungen:
- EP-A- 0 307 344
- EP-A- 0 392 411
- DE-A- 4 219 669
- DE-A- 4 401 785
- US-A- 5 732 074

## Beschreibung

### TECHNISCHES GEBIET

Die vorliegende Erfindung bezieht sich auf das Gebiet der Kfz-Elektrik bzw. Elektronik. Sie betrifft eine Steuerung für eine Mehrzahl von elektrischen Verbrauchern eines Kraftfahrzeugs.

### STAND DER TECHNIK

Es ist bekannt, in einem Kraftfahrzeug elektrische Verbraucher zu schalten und/oder zu regeln. Dies geschieht bisher mit Hilfe einfacher Schalter (Beispiel: Licht an/aus), Taster (Beispiel: elektrischer Fensterheber oder elektrisch verstellbarer Aussenspiegel) oder Steller (Beispiel: Instrumentenbeleuchtung) in einem Stromkreis. Die Steller sind in der Regel analog ausgeführt. Sie sind weiterhin für den jeweiligen Vorgang bzw. Verbraucher spezifisch ausgelegt und dezentral angeordnet. Dies hat zugleich den Nachteil, dass bei einer Vielzahl von elektrischen Verbrauchern, wie sie bei modernen Kraftfahrzeugen vorhanden sind, eine Vielzahl von Energieversorgungsleitungen mit entsprechenden Steckverbindern von den Schaltern, Tastern und Stellern zu den einzelnen Verbrauchern geführt werden müssen.

Es sind weiterhin Bemühungen bekannt, einen Rechner (Computer) zur Steuerung eines Teils der elektrischen Ausrüstung des Kraftfahrzeugs heranzuziehen. Der Rechner ist zentral angeordnet und teilweise spezifisch auf die Steuerungsaufgaben hin ausgelegt. Er erzeugt die Steuerimpulse für das elektrische Bauteil (den elektrischen Verbraucher). Gleichzeitig nimmt der Rechner auch sog. "Infotainment"-Aufgaben wahr, wie z.B. Navigation, Radio oder Telematik. Problematisch ist hierbei die Optimierung des Betriebssystems, um sowohl Infotainment als auch Steuerungsaufgaben wahrzunehmen. Problematisch ist aber auch die Nachrüstbarkeit und die Skalierbarkeit von Aufgaben aus dem Steuerungsbereich, sofern dabei Hardware-Aenderungen am PC vorgenommen werden müssen.

Die **DE-A1-42 19 669** bezieht sich auf ein Steuergerät zur Berechnung von Steuergrößen für sich wiederholende Steuervorgänge in einem Kfz. Dazu gehören insbesondere das Motormanagement (Zündung, Einspritzung) und das ABS-Bremssystem. Dabei weist das Zündmodul, das Einspritzmodul und das Bremsmodul jeweils einen Mikroprozessor, einen Speicher-Baustein und Ein-/Aus-Schaltkreise auf und diese Module übertragen die erreichten Steuergrößen über einen angeschlossenen Datenbus laufend an ein zentrales Steuergerät. Hierbei kann jedes für die Datenübertragung im Kraftfahrzeug geeignete Bussystem Verwendung finden.

Die **EP-A1-0 392 411** betrifft eine KfZ-Steuerung mit einem zentralen Systemmanager-Modul, das über einen Bus mit Verbrauchermodulen (air conditioner, power steering, transmission) zusammenwirkt, wobei das Systemmanager-Modul nur aktivierbar ist, wenn sich der Benutzer ihm gegenüber als rechtmäßiger Benutzer identifiziert hat. Ein spezielles Übertragungsprotokoll ist nicht vorgesehen.

Die **DE-A1-44 01 785** offenbart ein integriertes Verdrahtungssystem für ein KfZ mit einer zentralen Steuereinheit und einer Vielzahl von Endgeräte-Steuereinheiten, die Daten miteinander austauschen. Dieser Datenaustausch erfolgt nicht nach einem einheitlichen Protokoll, sondern nach unterschiedlichen Kommunikationsprotokollen mit unterschiedlicher Übertragungsgeschwindigkeit.

Die **EP-A1-0 307 344** offenbart ein Bordnetz für KfZ, bei dem Teilnehmerstationen über einen Bus Daten austauschen. Den Teilnehmerstationen sind Schnittstelleneinrichtungen sternförmig angeschlossen, an die ihrerseits Endeinrichtungen (Verbraucher) gruppenweise angeschlossen sind. Eine Zusammenfassung zu Verbrauchermodulen ist nicht vorgesehen.

Die **US-A-5,732,074** schliesslich offenbart ein mobiles tragbares drahtloses Kommunikationssystem, bei dem die Datenübertragung zwischen einem entfernten Computer und einer KfZ-Steuerung nach dem Internet-Protokoll erfolgt. Die Daten werden im KfZ umgesetzt und einem lokalen Steuemetzwerk zugeführt, das nicht nach dem Internet-Protokoll, sondern nach einem anderen Bussystem (CAN) arbeitet.

### DARSTELLUNG DER ERFINDUNG

Es ist daher Aufgabe der Erfindung, eine Steuerung für die elektrischen Verbraucher in einem Kraftfahrzeug anzugeben, welche einfach im Aufbau, flexibel an die unterschiedlichsten Steuerungsaufgaben anpassbar und leicht skalierbar und erweiterbar ist.

Die Aufgabe wird bei einer Steuerung der eingangs genannten Art dadurch erreicht, dass jeder der elektrischen Verbraucher zusammen mit einem lokalen Rechner in einem Verbrauchermodul angeordnet ist und innerhalb des Verbrauchermoduls von dem zugehörigen lokalen Rechner gesteuert wird und dass die lokalen Rechner über einen Datenbus mit einem zentralen Rechner in Verbindung stehen und nach einem einheitlichen Protokoll Steuerungsdaten austauschen. Der Kern der Erfindung besteht darin, ein zu regelndes bzw. schaltendes elektrisches Bauelement (Verbraucher) mit einem lokalen Rechner, z.B. in Form eines Ein-Chip-Computers, zu verknüpfen, der die Steuerelektronik beinhaltet bzw. seinerseits ansteuert. Das zu regelnde (schaltende) Bauteil kann dann einfach von dem zentralen Rechner aus über den Datenbus und den lokalen Rechner nach einem einheitlichen Protokoll angesteuert werden. Dabei ist vorgesehen, dass der zentrale Rechner zu jedem der lokalen Rechner in einer Client-Server-Beziehung steht, der Datenaustausch zwischen dem zentralen Rechner und den lokalen Rechnern über den Datenbus nach dem Internet-Protokoll erfolgt und die vemetzten Rechner ein Intranet bilden.

Grundsätzlich ist es denkbar, jedem einzelnen elektrischen Verbraucher einen eigenen lokalen Rechner zuzuordnen. Dies bedeutet jedoch einen relativ hohen Aufwand an Busleitungen und lokalen Rechnern. Da ausserdem in der heutigen Zeit immer mehr dazu übergangen wird, mehrere artoder funktionsverwandte elektrische Verbraucher in vorverkabelten Modulen zusammenzufassen, ist es vorteilhaft, wenn gemäss einer ersten bevorzugten Ausführungsform der Erfindung innerhalb eines Verbrauchermoduls mehrere elektrische Verbraucher zusammengefasst und von einem lokalen Rechner gesteuert werden. Der Datenbus ist dabei vorzugsweise so ausgelegt, dass er eine Mehrzahl von sternförmig zwischen dem zentralen Rechner und den einzelnen Verbrauchermodulen verlaufenden Busleitungen umfasst, wodurch sich eine leichte Montage und eine einfache Erweiterbarkeit um neue Module bzw. Verbraucher ergibt.

Besonders einfach und flexibel ist die Steuerung, wenn für den Datenaustausch in den lokalen Rechnern jeweils ein Server-Programm, insbesondere ein Micro-Serverprogramm. und auf dem Zentralrechner ein Browser-Programm installiert ist. Derartige Micro-Server, die nur noch wenige kB Speicher benötigen und somit auf kleinen Ein-Chip-Computern lauffähig sind, sind seit einiger Zeit verfügbar und werden z.B. von der amerikanischen Firma Spyglass angeboten.

Es ergibt sich hierdurch die Möglichkeit, das Fahrzeug nachzurüsten, beispielsweise mit elektrischen Fensterhebern, ohne dass der Zentralrechner hierdurch unterdimensionert wird.

Weiterhin ergibt sich die Möglichkeit die CTU und die Speicherausstattung des Zentralrechners weitgehend unabhängig von der elektrischen. Ausstattung des Kfz auszuführen, was Vorteile in der Lagerhaltung beim Kfz-Hersteller birgt.

Weitere Ausführungsformen ergeben sich aus den abhängigen Ansprüchen.

### KURZE ERLÄUTERUNG DER FIGUREN

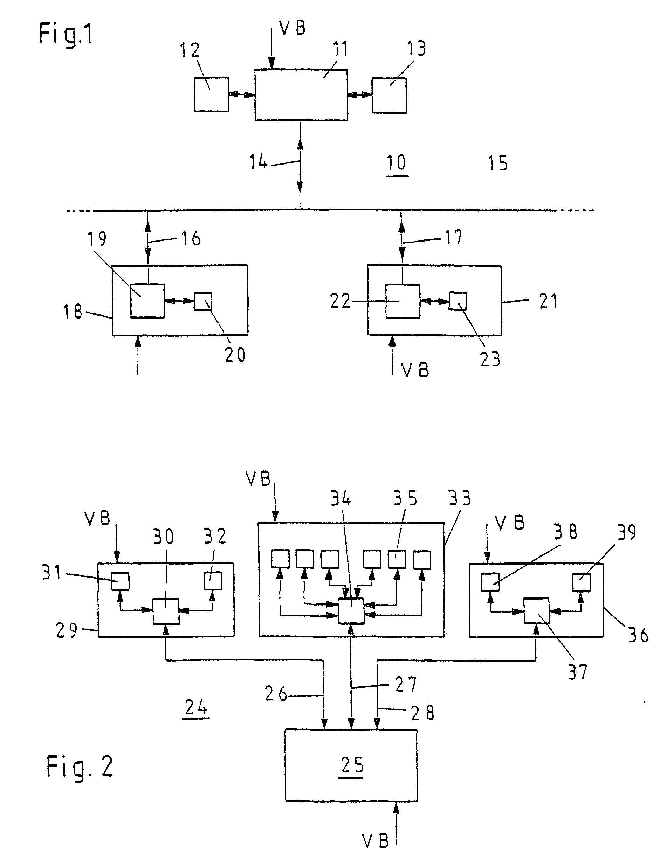

Die Erfindung soll nachfolgend anhand von Ausführungsbeispielen im Zusammenhang mit der Zeichnung näher erläutert werden. Es zeigen
- Fig. 1: in einem Blockdiagramm ein erstes bevorzugtes Ausführungsbeispiel für eine Steuerung nach der Erfindung, bei welcher jedem elektrischen Verbraucher ein eigener lokaler Rechner zugeordnet ist, und der zentrale Rechner und die lokalen Rechner an einen gemeinsamen Datenbus angeschlossen sind;
- Fig. 2: in einem Blockdiagramm ein zweites bevorzugtes Ausführungsbeispiel für eine Steuerung nach der Erfindung, bei welcher den elektrischen Verbrauchern gruppenweise ein eigener lokaler Rechner zugeordnet ist, und der zentrale Rechner und die lokalen Rechner über einen sternförmigen Datenbus Steuerungsdaten austauschen; und

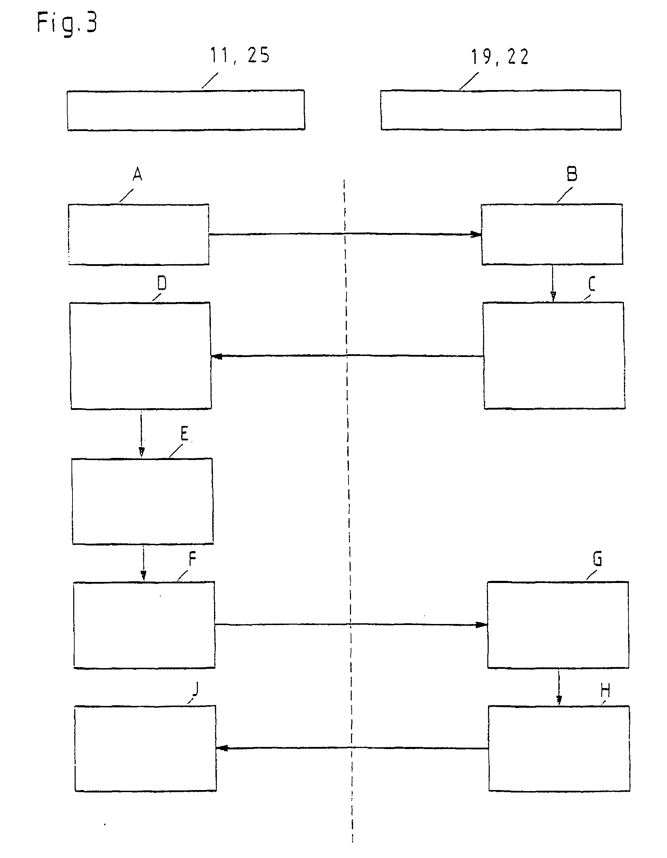

- Fig. 3: den schematischen Ablauf eines Steuerungsvorgangs in dem als Intranet ausgebildeten Steuerungssystem nach der Erfindung.

### WEGE ZUR AUSFÜHRUNG DER ERFINDUNG

Fig. 1 zeigt ein erstes bevorzugtes Ausführungsbeispiel einer Kfz-Steuerung nach der Erfindung. In der Steuerung 10 tauscht ein zentraler Rechner 11, der beispielsweise am oder in der Nähe des Armaturenbrett(s) angeordnet ist, über einen gemeinsamen Datenbus 15 Steuerungsdaten mit einzelnen lokalen Rechner 19 und 22 aus, die jeweils innerhalb eines Verbrauchermoduls 18 bzw. 21 Verbraucher 20 bzw. 23 zugeordnet sind. Das Verbrauchermodul 18 kann beispielsweise ein Fensterhebermodul sein, das Verbrauchermodul 21 ein Sitzversteller. Die Rechner 11, 19 und 22 sind jeweils über Anschlussleitungen 14, 16 und 17 an den Datenbus 15 angeschlossen. Sowohl der zentrale Rechner 11 als auch die Verbrauchermodule 18, 21 werden separat mit der Batteriespannung VB versorgt. Auf dem zentralen Rechner 11 läuft als Anwendungsprogramm ein Internat-Browser. Auf den lokalen Rechnern 19, 22 läuft jeweils als Anwendungsprogramm ein sog. Micro-Server. Alle drei Einheiten 11, 18, 21 besitzen eine eigene Internet-Adresse, z.B. "auto-pc.mein-auto.car", "fensterheber1.mein-auto.car" und "sitz1.mein-auto.car".

In Fig. 3 ist der Ablauf der Steuerung schematisch dargestellt es bedeuten:
- A =: Start Browser
- B =: Anfrage Server
- C =: Server sucht bisherige Homepage
- D =: Browser zeigt bisherigen Status
- E =: Eingabe neuer Status
- F =: Browser sendet Soll-Status
- G =: Server gibt Befehl an Controller
- H =: Server sendet neue Homepage
- I =: Browser zeigt neuen Status

Zum Steuern der Fensterheber wird in Analogie zu der selbsterklärenden Darstellung in Fig. 3 auf dem zentralen Rechner ("Auto-PC") der Web-Client gestartet und beispielsweise die Homepage des Fensterhebers (Web-Server auf dem lokalen Rechner 19) aufgerufen. Sie stellt den Status dar und erlaubt, geänderte Einstellungen vorzunehmen. Dies kann beispielsweise über eine Eingabevorrichtung (Tastatur oder dgl.) 12 erfolgen, die an den zentralen Rechner 11 angeschlossen ist. Beispiel: Angezeigter Status: "Fenster offen". Aktion: Fenster mit "soft"-Schieberegler teilweise schliessen oder mit "soft"-Knopf ganz schliessen (die "soft"-Elemente sind dabei durch die Software erzeugte und dargestellte Bedienelemente). Angezeigter Endstatus: "Fenster (teilweise) geschlossen"0.

Im Fall des elektrisch verstellbaren Sitzes (Verbrauchermodul 21) sind zusätzlich Komfortmerkmale wie z.B. ein persönliches Einstellungsprofil denkbar und vorgesehen. Diese sind zwar auf jeden Fall über den zentralen Rechner 11 steuerbar, abrufbar und programmierbar. Es ist jedoch möglich, die Daten hierfür sowohl im Verbrauchermodul (Sitzmodul) 21 selbst als auch im zentralen Rechner 11 abzuspeichern.

Wenn an den zentralen Rechner 11 - wie in Fig. 1 gezeigt - eine Anzeigevorrichtung 13 (z.B. eine grossflächige LCD-Anzeige) angeschlossen ist. können die Homepages der einzelnen Verbraucher bzw. Verbrauchermodule tatsächlich graphisch dargestellt werden. Dies ist jedoch nicht wesentlich für die Funktion der erfindungsgemässen Steuerung. Wichtig ist vielmehr die Art der Kommunikation unter einem gemeinsamen (Internet-)Protokoll und die Aufteilung der Rechnerintelligenz auf den zentralen Rechner 11 als Client und die lokalen Rechner 19, 22 als Server.

Grundsätzlich können die elektrischen Verbraucher alle einzeln als intelligente Module mit Serverfunktion ausgebildet sein. Es hat sich jedoch in der Kfz-Produktion zunehmend eingebürgert, das Auto aus einzelnen Modulen zusammenzubauen, die bei Unterlieferanten vorher vollständig zusammengebaut und vorverkabelt worden sind, wie z.B. die Frontpartie mit den Scheinwerfer/Blinker-Kombinationen. In diesem Zusammenhang ist es von Vorteil, wenn gemäss Fig. 2 einzelne funktionell zusammengehörige elektrische Verbraucher 31, 32 bzw. 35 bzw. 38, 39 zu vorverkabelten Verbrauchermodulen 29 bzw. 33 bzw. 36 vereinigt und innerhalb des Verbrauchermoduls von einem einzigen lokalen Rechner 30 bzw. 34 bzw. 37 als lokaler Intelligenz angesteuert werden. Die intelligenten Verbrauchermodule 29, 33, 36 sind dabei über sternförmige Busleitungen 26, 27, 28 mit einem zentralen Rechner 25 verbunden, der als Client die lokalen Rechner/Server 30, 34 und 37 gemäss dem Internetprotokoll ansteuert. Die Verbrauchermodule 29 und 36 können dabei z.B. Sitzmodule mit jeweils zwei Motoren als elektrische Verbraucher 31, 32 bzw. 39, 39 sein. Das Verbrauchermodul 33 kann beispielsweise ein Frontmodul mit sechs elektrischen Verbrauchern 35 sein, die sich aus zwei Lampen, zwei Blinkern und zwei Scheinwerferhöhenverstellungen (jeweils drei Verbraucher links und rechts) zusammensetzen.

Die elektrischen Bauteile (Verbraucher) 31, 32 bzw. 35 bzw. 38, 39 in den Verbrauchermodulen 29, 33, 36 werden vorverkabelt. In jedem Modul ist als Modulintelligenz ein lokaler Rechner 30 bzw. 34 bzw. 37 angeordnet und mitverkabelt. Auf Stecker kann dabei verzichtet werden. Nach aussen hat jedes Modul zwei Verbindungen, nämlich eine elektrische zur Stromversorgung, und eine Busleitung 26 bzw. 27 bzw. 28. Die elektrische Verbindung wird auf beliebige Art mit der Batteriespannung VB verbunden. Die Busleitung (Busverbindung) ist ein ggf. langes Kabel ggf. mit einem Stecker. Der zentrale Rechner 25 ist am Armaturenbrett angeordnet. Er weist auf der Rückseite eine Anzahl von (nicht dargestellten) Buchsen auf, in welche die Buskabel (26, 27, 28) aus den Verbrauchermodulen 29, 33, 36 eingesteckt werden.

Zur Verstellung eines Sitzes wird über Bedienelemente am Armaturenbrett vom zentralen Rechner - z.B. in der oben bereits beschriebenen Weise (siehe Fig. 3) - ein Befehl an das Sitzmodul 29 gesendet, in welchem der lokale Rechner dann den gewünschten Motor (Verbraucher 31 oder 32) ansteuert. Ebenso wird zur Verstellung eines Scheinwerfers über Bedienelemente am Armaturenbrett vom zentralen Rechner 25 ein Befehl an das Scheinwerfermodul 33 gesendet, in welchem der lokale Rechner 34 den gewünschten Motor ansteuert. Zum Einschalten eines Scheinwerfers wird über Bedienelemente am Armaturenbrett vom zentralen Rechner 25 ein Befehl an das Scheinwerfermodul (Frontmodul) 33 gesendet, in welchem der lokale Rechner 34 den gewünschten Scheinwerfer anschaltet.

Da der zentrale Rechner 25 durch die Schaltvorgänge nicht sonderlich belastet wird, ist es zweckmässig, einen bereits für andere Zwecke (z.B. Infotainment) im Armaturenbrett vorhandenen Rechner dafür mit einzusetzen.

Insgesamt ergibt sich mit der Erfindung eine Steuerung für ein Kraftfahrzeug, die einfach aufgebaut und erweitert werden kann, flexibel in der Anwendung ist, und mit standardisierten Hardware- und Softwarekomponenten realisiert werden kann.

## Patentansprüche

1. Steuerung (10, 24) für eine Mehrzahl von elektrischen Verbrauchern (20, 23; 31, 32, 35, 38, 39) eines Kraftfahrzeugs, wobei jedem der elektrischen Verbraucher (20, 23; 31, 32, 35, 38, 39) zur Steuerung ein lokaler Rechner (19, 22; 30, 34, 47) zugeordnet ist, und die lokalen Rechner (19, 22; 30, 34, 47) über einen Datenbus (15; 26, 27, 28) mit einem zentralen Rechner (11, 25) in Verbindung stehen und nach einem einheitlichen Protokoll Steuerungsdaten austauschen,
**dadurch gekennzeichnet**,
jeder der elektrischen Verbraucher (20, 23; 31, 32, 35, 38, 39) zusammen mit dem zugehörigen lokalen Rechner (19, 22; 30, 34, 47) in einem Verbrauchermodul (18, 21; 29, 33, 36) angeordnet ist und innerhalb des Verbrauchermoduls (18, 21; 29, 33, 36) von dem zugehörigen lokalen Rechner (19, 22; 30, 34, 47) gesteuert wird, dass der zentrale Rechner (11, 25) zu jedem der lokalen Rechner (19, 22; 30, 34, 47) in einer Client-Server-Beziehung steht, und dass der Datenaustausch zwischen dem zentralen Rechner (11, 25) und den lokalen Rechnern (19, 22; 30, 34, 47) über den Datenbus (15; 26, 27, 28) nach dem Internet-Protokoll erfolgt und die vernetzten Rechner (11, 25; 19, 22; 30, 34, 37) ein Intranet bilden.

2. Steuerung nach Anspruch 1,
**dadurch gekennzeichnet,**
**dass** innerhalb eines Verbrauchermoduls (29, 33, 36) mehrere elektrische Verbraucher (31, 32; 35; 38, 39) zusammengefasst und von einem lokalen Rechner (30, 34, 37) gesteuert werden.

3. Steuerung nach Anspruch 2,
**dadurch gekennzeichnet,**
**dass** der Datenbus eine Mehrzahl von sternförmig zwischen dem zentralen Rechner (25) und den einzelnen Verbrauchermodulen (29, 33, 36) verlaufenden Busleitungen (26, 27, 28) umfasst.

4. Steuerung nach einem der Ansprüche 1 bis 3 ,
**dadurch gekennzeichnet,**
**dass** für den Datenaustausch in den lokalen Rechnern (19, 22; 30, 34, 37) jeweils ein Server-Programm, insbesondere ein Micro-Server-Programm, und auf dem Zentralrechner (11, 25) ein Browser-Programm installiert ist.

5. Steuerung nach Anspruch 4,
**dadurch gekennzeichnet,**
**dass** an den zentralen Rechner (11) eine Anzeigevorrichtung (13) angeschlossen ist, derart, dass die Homepage des jeweiligen angewählten lokalen Rechners (19, 22; 30, 34, 37) zur Steuerung auf der Anzeigevorrichtung (13) dargestellt wird.

## Claims

1. Controller (10, 24) of a multiplicity of electrical loads (20, 23; 31, 32, 35, 38, 39) of a motor vehicle, each of the electrical loads (20, 23; 31, 32, 35, 38, 39) being assigned a local computer (19, 22; 30, 34, 47) for control purposes, and the local computers (19, 22; 30, 34, 47) being connected to a central computer (11, 25) via a databus (15; 26, 27, 28) and exchanging control data in accordance with a uniform protocol, **characterized in that** each of the electrical loads (20, 23; 31, 32, 35, 38, 39) is arranged, together with the associated local computer (19, 22; 30, 34, 47), in a load module (18, 21; 29, 33, 36) and is controlled within the load module (18, 21; 29, 33, 36) by the associated local computer (19, 22; 30, 34, 47), **in that** the central computer (11, 25) is connected to each of the local computers (19, 22; 30, 34, 47) in a client/server relationship, and **in that** the exchange of data between the central computer (11, 25) and the local computers (19, 22; 30, 34, 47) takes place via the databus (15; 26, 27, 28) in accordance with the Internet protocol, and the networked computers (11, 25; 19, 22; 30, 34, 37) form an Intranet.

2. Controller according to Claim 1, **characterized in that** a plurality of electrical loads (31, 32; 35; 38, 39) are combined within a load module (29, 33, 36) and are controlled by a local computer (30, 34, 37).

3. Controller according to Claim 2, **characterized in that** the databus comprises a multiplicity of bus lines (26, 27, 28) which run in a star shape between the central computer (25) and the individual load modules (29, 33, 36).

4. Controller according to one of Claims 1 to 3, **characterized in that**, for the exchange of data, in each case a server program, in particular a micro-server program, is installed in the local computers (19, 22; 30, 34, 37) and a browser program is installed on the central computer (11, 25).

5. Controller according to Claim 4, **characterized in that** a display device (13) is connected to the central computer (11) in such a way that the home page of the respective, selected local computer (19, 22; 30, 34, 37) is displayed on the display device (13) for control purposes.

## Revendications

1. Commande (10, 24) pour plusieurs consommateurs électriques (20, 23, 31, 32, 35, 38, 39) d'un véhicule automobile, à chaque consommateur (20, 23, 31, 32, 35, 38, 39) est associé un calculateur local (19, 22, 30, 34, 47) pour sa commande et les calculateurs locaux (19, 22, 30, 34, 47) sont reliés par un bus de données (15, 26, 27, 28) à un calculateur central (11, 25) et échangent des données de commande selon un protocole uniforme,
**caractérisée en ce que**
chacun des consommateurs électriques (20, 23, 31, 32, 35, 38, 39) est monté avec le calculateur local correspondant (19, 22, 30, 34, 47) dans un module de consommateurs (18, 21, 29, 33, 36) et il est commandé par le calculateur local correspondant (19, 22, 30, 34, 47) dans le module de consommateurs (18, 21, 29, 33, 36), le calculateur central (11, 25) est en relation de client/serveur avec chacun des calculateurs locaux (19, 22, 30, 34, 47) et
l'échange de données entre le calculateur central (11, 25) et les calculateurs locaux (19, 22, 30, 34, 47) se fait par le bus de données (15, 26, 27, 28), selon le protocole Internet et les calculateurs en réseau (11, 25, 19, 22, 30, 34, 37) forment un réseau Intranet..

2. Commande selon la revendication 1,
**caractérisée en ce que**
plusieurs consommateurs électriques (31, 32, 35, 38, 39) sont regroupés dans un module de-consommateurs (29, 33, 36)
et ils sont commandés par un calculateur local (30, 34, 37).

3. Commande selon la revendication 2,
**caractérisée en ce que**
le bus de données comprend plusieurs lignes de bus (26, 27, 28) en étoile entre le calculateur central (25) et les différents modules de consommateurs (29, 33, 36).

4. Commande selon l'une des revendications 1 à 3,
**caractérisée par**
un programme de serveur dans les calculateurs locaux (19, 22, 30, 34, 37) pour l'échange des données, notamment un programme de microserveur et un programme de navigateur est installé dans le calculateur central (11, 25).

5. Commande selon la revendication 4,
**caractérisée par**
un dispositif d'affichage (13) relié au calculateur central (11) de façon à présenter la page annonces de chaque calculateur local sélectionné (19, 22, 30, 34, 37) pour la commande sur l'afficheur (13).
